# EUROPEAN PATENT APPLICATION

(11) **EP 4 646 933 A1**
(43) Date of publication of application: **12.11.2025**
(21) Application number: 24305721.3
(22) Date of filing: 07.05.2024
(51) Int. Cl.: A21D 6/00, A23L 7/10, C08B 30/12, C08L 3/02

(54) **METHOD OF PRODUCING MICROWAVE-PROCESSED STARCH OR FLOUR**

(71) Applicant: ROQUETTE FRERES, 62136 Lestrem (FR)
(72) Inventor: HASJIM, Jovin, 62400 BETHUNE (FR); BOCK, Solène, 59130 LAMBERSART (FR); Kapusniak, Kamila, 42-217 CZESTOCHOWA (PL); Wójcik, Malwina, 42-242 REDZINY (PL)
(74) Representative: Plasseraud IP

(57) **Abstract**

The invention is relative to a method for producing a microwave-processed starch or flour comprising the steps consisting of soaking a native starch or flour in an aqueous buffer solution, drying the starch or flour to a moisture content of less than about 2% (wt.%), and heating the dried starch or flour using microwaves at a temperature below 100°C, preferably between 60°C and 90 °C.

## Description

The invention relates to a method of producing microwave-processed starch or flour, which has improved heat, acid, and shear resistances, and has stabilized viscosity, following using microwave heating.

Such microwave-processed starches or flours can then be used as texturizing and thickening agents in numerous food applications, in particular as natural texturizers, especially for foods such as yogurt, ketchup, salad dressings, sauces, gravies, retorted foods, pet foods, gluten-free baked goods, vegan or imitation dairy products, imitation or processed cheese products, puddings, confectionary compositions, beverages and non-dairy creamers.

### FIELD OF THE INVENTION

Synthesized biochemically, source of carbohydrates, starch is one of the most widespread organic materials in the plant kingdom, where it constitutes organisms' nutrient reserves.

Starches have always been used in the food industry, not only as a nutritional ingredient but also for their functional properties, as a thickening agent, binder, stabilizer, or gelling agent.

For example, it is known that native starches are used in preparations that require cooking. Corn starch, in particular, forms the basis of "powders for flan".

When it is rich in amylose, it retrogrades and forms strong gel. Therefore, it is possible to obtain firm flans after cooking and cooling. It is also suitable for custards.

However, this type of starch cannot be used in pastries intended to be frozen since, upon defrosting, the well-known phenomenon of syneresis, which is reflected by the expulsion of water, deteriorates the texture of the custard.

Thus, in its native state, starch has limited applicability due to syneresis, and also due to:
- its low resistance to shear stresses, to heat treatments, and to acidic pH,
- its limited processability, and
- its low solubility in common organic solvents.

Thus, in order to meet today's demanding technical requirements, the properties of starch have to be optimized by various methods known as "modification".

These main modifications therefore aim to adapt the starch to the technical constraints resulting from cooking, from freezing/thawing, from appertization or sterilization, from acidic pH, and to make it compatible with modern foods (microwaves, instant meals, "high temperatures", etc.).

Starch modification therefore aims to correct one or more of the abovementioned defects, thereby improving its versatility and meeting the needs of consumers.

Techniques for modifying starch have generally been classified into four categories: physical, chemical, enzymatic, and genetic, the ultimate goal being to produce various derivatives with optimized physicochemical properties.

Chemical and physical modifications are most commonly implemented.

Chemical treatment consists of introducing new functional groups onto the starch molecules, which alters its physicochemical properties in a noteworthy manner. Indeed, such modifications of granular native starches profoundly alter their behavior in terms of gelatinization, pasting, gelling, and retrogradation.

Generally, these modifications are made by chemical derivatization, such as esterification, etherification, crosslinking, or grafting.

However, chemical modifications are less sought-after by consumers in food applications (also for environmental reasons), even if some modifications are generally recognized as safe (GRAS) for human consumption.

Various physical modifications are thus proposed, for example:
- heat moisture treatment (HMT), consisting of treating the starch at controlled moisture levels (typically 22-27%) and at high temperature, for 16 hours or more, in order to alter the structure and physicochemical properties of the starch;
- annealing, consisting of treating the starch in an excess of water at temperatures below the gelatinization temperature, in order to come close to the glass transition temperature;
- high-pressure processing (HPP), by means of which the amorphous regions of the starch granule are hydrated, leading to a distortion of the crystalline parts of the granule and promoting the accessibility of said crystalline regions to water;
- glow discharge plasma treatment, which generates, at ambient temperature, high-energy electrons and other highly active species. Applied to the starch, these active species excite the chemical groups in the starch and cause significant crosslinking of the macromolecules;
- osmotic pressure treatment (OPT), carried out in the presence of solutions with a high content of salts. The starch is suspended in a saturated salt solution (high osmotic pressure) and then exposed to high temperature. The treatment increases the gelatinization temperature of starch significantly. It also alters the crystalline structure of starches with the B-type crystallinity, such as potato starch, to the A-type crystallinity;
- "dry heating" treatment (DHT), consisting of treating the starch at high temperature, typically between 100 and 150°C, with reduced moisture (<10%);
- "thermal inhibition" treatment. Generally, thermal inhibition means dehydrating a starch until it reaches the anhydrous or substantially anhydrous state (i.e. <1% moisture), then a heat treatment at above 100°C for a sufficient period of time to "inhibit" the starch, in this case to afford the properties of crosslinked starches. Moreover, it is necessary to condition the starch under pH
conditions, which are at least neutral to preferentially alkaline, before carrying out the step of forced dehydration.

An alternative to "thermal inhibition" treatment has been proposed in the solvent phase and consists of heating a non-pre-gelatinized granular starch in an alcohol-based medium in the presence of a base and salts at a temperature of 120 to 200°C for 5 minutes to 2 hours.

Regardless, the thermal inhibition process thus leads to obtaining a starch paste having properties of increased resistance to viscosity breakdown and a non-cohesive texture.

In this particular technical field, mention may more particularly be made of the patent US 5,725,676 that describes the thermal inhibition of non-gelatinized starch.

The thermal inhibition conditions are 100 °C or greater for a period of time. The pH of the starch sample is neutral or greater, and it is dehydrated to substantially anhydrous or anhydrous.

In addition, the US 6,221,420 describes a thermally inhibited starch obtained by dehydration then heat treatment.

The main steps are:
- dehydration of the starch to anhydrous or substantially anhydrous state (<1% moisture), then
- heat treatment of the dry starch thus obtained, at between 100 to 180 °C for a duration of up to 20 hours.

Before the step of dehydrating the starch, it is recommended to perform a step of alkalinization of the starch to bring the pH of the starch to a value of between 7 and 10, preferably of between 8 and 10.

At this stage, before the step of forced dehydration, which precedes the inhibition step, the water content of the starch (as demonstrated by way of examples) is between 8 and 10%.

US 2001/0017133 describes a similar method, in which the starch is also dehydrated thermally or non-thermally to anhydrous or substantially anhydrous (i.e. <1% moisture), followed by the inhibition process at a temperature of 100 °C or greater, preferentially of between 120 and 180°C.

Before the dehydration step, the conventional alkalinization step leads to a starch suspension having a pH value of neutral or greater, preferably of between 7 and 9.5, and a water content of between 2 and 15%.

A variant was proposed in patent application WO 2014/042537, which variant relates to heating an alkaline starch at temperatures of between 140 and 190 °C while ensuring that the inhibition method is initiated and carried out in the presence of a sufficient amount of water, that is more than 1% water.

In other words, this method recommends the thermal inhibition of a starch, which has been alkalinized beforehand without carrying out a forced dehydration step to anhydrous state.

The starch preparation or the starch is thus brought to a pH of between 9.1 and 11.2, preferentially around 10, and the water content is adjusted to between 2 and 22%, preferentially between 5 and 10%.

The thermal inhibition is subsequently carried out directly on this powder or this starch, at a temperature of between 140 and 190 °C, preferentially between 140 and 180 °C, for a duration of at least 30 minutes up to 3 hours.

In the international patent application WO 2022/167152 owned by the Applicant, the thermal inhibition of starch is done by acid with the content of fixed citrate between 0.12 and 0.16%. The starch is mixed with citrate buffer solution at pH 4 to obtain 20% moisture, left for 30 min to 24 hours, dried to 13% moisture, and thermally treated at 170°C.

In the international patent application WO 2019/122749 also owned by the Applicant, the thermal treatment of starch is performed at alkaline pH. Starch slurry (30%-40% concentration) is mixed with an alkaline reagent to obtain final conductivity between 0.7 and 2.5 mS/cm (measured at 20% slurry after dehydration). The contact time is between 0.5 and 5 hours, followed by filtration, drying, and thermal treatment at higher than 180°C for 8 to 50 min.

From the foregoing, it is noted that the methods for thermal inhibition implemented in order to stabilize the viscosity of starches employ methods requiring a long time, on the order of a hours when heated at a temperature of at least 100°C, and more preferably between 140°C and 170°C.

There is therefore a need for a novel method for inhibiting starch, making it possible to further reduce the reaction or preparation time and lower the temperature of the thermic treatment below 100°C of the starch to be "thermally inhibited".

The present invention discloses methods for thermally inhibiting starch using microwave heating. The disclosed methods are performed in shorter times and at lower temperatures compared to the other methods used to obtain similar degrees of inhibition.

### DESCRIPTION OF THE INVENTION

Thus, the invention relates to a method for producing a microwave-processed starch or flour comprising the steps consisting of:
- soaking a native starch or flour in an aqueous buffer solution,
- drying the starch or flour without causing starch gelatinization to a moisture content of less than about 2% (wt.%), and
- heating the dried starch or flour using microwaves at a temperature below 100°C, preferably between 60°C and 90 °C, for a total time up to about 2 hours, preferably up to about 60 minutes.

The starch or the flour to be used in the process of the invention may be of any origin, for example corn, waxy corn, amylomaize, wheat, waxy wheat, pea, potato, waxy potato, tapioca, waxy tapioca, rice, waxy rice, faba bean, sorghum, waxy sorghum, etc.

Preferentially, for starch base, corn starch will be chosen, more particularly waxy corn starch (with a high content of amylopectin), potato starch, tapioca starch and pea starch, as will be illustrated hereinbelow.

The process in accordance with the invention first requires the preparation of a starch or flour slurry with a solid content of between 30% and 40%, preferably between 35% and 37% by weight. As will be illustrated hereinbelow, the solids content is set at 36.5% by weight.

Then, the starch or flour is soaked in an aqueous buffer solution.

Any food grade buffering agent can be used to make aqueous buffer solution, including any food grade organic acid and its salt form.

In some embodiments, the buffer solution is a carbonate or a citrate solution.

Depending on the buffer system used, the buffered starches or flours may have pH between about 4 and 10 using any suitable food grade acid or base.

In some embodiments, a buffered starch or flour is adjusted to pH from about 7 to about 10 or from about 8 to about 10. As will be illustrated hereinbelow, the buffered starch is adjusted to pH 10.

The alkaline agent is preferentially chosen from the group consisting of sodium hydroxide, sodium carbonate, tetrasodium pyrophosphate, ammonium orthophosphate, disodium orthophosphate, trisodium phosphate, calcium carbonate, calcium hydroxide, potassium carbonate and potassium hydroxide, taken alone or in combination, even more preferentially sodium carbonate. As will be illustrated hereinbelow, the alkaline agent is sodium carbonate added in powder form.

In some other embodiments, a buffered starch or flour is adjusted to pH from about 4 to about 7 or from about 4 to about 6. As will be illustrated hereinbelow, the buffered starch is adjusted to pH of 4 or 6.

This pH is reached in two steps: directly adding citric acid powder into the starch slurry to reach pH about 2.5, followed by adding NaOH solution to reach the targeted pH of 4 or 6.

In some other embodiments, the starch or flour is soaked for a time up to about 4 hours, or for about 5 to about 120 minutes, or for about 10 to about 60 minutes.

The following step of the method of the invention consists of drying the starch or flour to a moisture content of less than about 2 % (wt.%).

As will be illustrated hereinbelow, the pH-adjusted starch or flour material is dried in a convention oven at 110°C for 2 h to reach 1.81% moisture and stored in a desiccator.

The last step of the method of the invention consists of heating the dried starch or flour using microwaves at a temperature below 100°C, preferably between 60°C and 90 °C, for a total time up to about 2 hours, preferably up to about 60 minutes.

In another embodiment, the dried starch or flour is heated using microwaves at a power up to 200 W, preferably between 100 W and 200 W for a total time up to about 2 hours, preferably up to about 60 minutes.

The technology disclosed in this present invention pertains to methods for making thermally modified starch or flour using microwave heating.

Starch or flour may be heated in a batch process, where batches of starch or flour are placed into a microwave reactor, heated, and removed prior to adding another batch of starch or flour.

Starch or flour may also be heated in a continuous process for example, starch or flour may be deposited in a substantially uniform layer onto a moving conveyor belt or similar apparatus that passes through a microwave reactor for the duration and at the temperature as said for the various embodiments described in this specification.

In embodiments of the method for thermally inhibiting, starch or flour described in this specification, the dried starch or flour having moisture content less than about 2% (wt.%) is heated at a temperature below 100°C, preferably between 60°C and 90 °C.

Contrary to the teaching of state of the art, notably WO 2023/018574, in the method disclosed herein, the heating is well below the heating of the dried starch of flour using microwaves at a temperature from about 110°C to about 140°C.

In any embodiment described in this specification, degree of thermal inhibition can be measured using a pasting profile evaluation, which is commonly used in the industry to measure the change in the viscosity of a slurry over time as the slurry is heated and cooled using a micro-visco-amylograph or similar equipment.

The heat and shear stability of starch was determined based on its pasting profile in demineralized water obtained using a Rapid Visco Analyzer (RVA 4500, Perten).

Starch or flour was mixed with demineralized water in an aluminum canister to obtain 8% slurry (dry weight basis).

The starch or flour slurry was heated isothermally at 50°C for 1 min, followed by heating to 92°C at a rate of 10.5°C/min (a total of 4 min), isothermal heating at 92°C for 5 min, cooling to 50°C at a rate of 10.5°C/min (a total of 4 min), and finally isothermal heating at 50°C for 11 min.

For better mixing, the stirring was started at 100 rpm, which was increased to 500 rpm and 960 rpm after 10 sec and 20 sec, respectively, and then decreased to 160 rpm.

From the RVA pasting profile in demineralized water, four parameters were identified.
- Peak viscosity is the highest viscosity between 0 min and 10 min.
- Trough is the lowest viscosity after peak viscosity between 5 min and 15 min.
- Final viscosity is the viscosity at the end of the analysis.
- Breakdown is the difference between peak viscosity and trough.

The ratio of trough to peak viscosity in percentage was also calculated. The increase in heat and shear stability was identified as an increase of overall viscosity, an increase in the ratio of trough to peak viscosity, a decrease in the peak viscosity with similar or higher final viscosity, and/or a decrease in the breakdown.

As it will be exemplified below, the best microwave treatments that we have obtained for a total time up to about 60 minutes and in a batch process are:
- at 100 W (maximum temperature 60°C) for 10 cycles of 45 s, and
- at 90°C for 5 cycles of 10 min.

Therefore, microwave may be used to perform starch inhibition similar to conventional thermal inhibition using oven, VOMM, and fluidized bed reactor, but at a lower temperature (below 100°C) for a shorter time and/or in cycles of short time treatment, which reduce the amount of energy required.

The thermally modified starch such obtained can then be used as texturizing and/or thickening agent in numerous food applications, in particular as natural texturizer, especially for foods, such as yogurt, ketchup, salad dressings, sauces, gravies, retorted foods, pet foods, gluten-free baked goods, vegan or imitation dairy products, imitation or processed cheese products, puddings, confectionary compositions, beverages, and non-dairy creamers.

The invention will be better understood with the aid of the following examples, which are intended to be illustrative and non-limiting.

### Figures:

Fig. 1. Power and temperature profiles of the microwave treatment set at 100 W for 45s (left and right graphs, respectively). The maximum temperature was set at 60°C.
Fig. 2. Power and temperature profiles of the microwave treatment set at 20 W for 10 min (left and right graphs, respectively). The maximum temperature was set at 60°C.
Fig. 3. RVA pasting profiles in demineralized water of the starch adjusted to pH 10 modified by continuous microwave treatments with fixed power setting and by oven treatments as comparison.
Fig. 4. RVA pasting profile in demineralized water of control native starch (without pH adjustment) and pH-adjusted starches before microwave treatment.
Fig. 5. RVA pasting profiles in demineralized water of non pH-adjusted (native) starches modified by the microwave treatment at 100 W for 45 s, up to 10 cycles.
Fig. 6. RVA pasting profiles in demineralized water of the starch adjusted to pH 10 modified by microwave treatments with fixed power setting in cycles and by oven treatments as comparison.
Fig. 7. RVA pasting profiles in demineralized water of pH-adjusted starches (pH 4, 6, 8, and 10) modified by 10 cycles of the microwave treatment at 100 W for 45 s.
Fig. 8. RVA pasting profiles in citric acid solution of the starch adjusted to pH 10 modified by 10 cycles of the microwave treatment at 100 W for 45 s and by the oven treatment at 170°C for 3 h as comparison.
Fig. 9. Power and temperature profiles of the microwave treatment set at 170°C for 10 min (left and right graphs, respectively). The maximum power is set by default at 200 W.
Fig. 10. Power and temperature profiles of the microwave treatment set at 100°C for 10 min (left and right graphs, respectively). The maximum power is set by default at 200 W.
Fig. 11. RVA pasting profiles in demineralized water of the starch adjusted to pH 10 modified by continuous microwave treatments with fixed temperature setting and by oven treatments as comparison.
Fig. 12. RVA pasting profiles in demineralized water of pH-adjusted starches (pH 4, 6, 8, and 10) modified by the continuous microwave treatment at 90°C for 60 min.
Fig. 13. RVA pasting profiles in demineralized water of the starch adjusted to pH 10 modified by microwave treatments with fixed temperature setting in cycles and by oven treatments as comparison.
Fig. 14. RVA pasting properties in demineralized water of pH-adjusted starches (pH 4, 6, 8, and 10) modified by five cycles of the microwave treatment at 90°C for 10 min.
Fig. 15. RVA pasting profiles in demineralized water of the starch adjusted to pH 10 modified by microwave treatments at 1.81% and 3.58% moisture contents.

### EXAMPLES

### Example 1. Continuous microwave treatments with fixed power setting

### Preparation of starch material

Waxy maize starch slurry (36.5% concentration) was prepared using demineralized water. The pH of the slurry was adjusted using sodium carbonate powder to reach pH 10. The slurry was stirred for one hour and filtered through a sintered glass filter.

The resulting starch cake was dried in a fluidized bed dryer (TG200, Retsch) at 60°C until the moisture was about 12%, and ground to fine particles.

Before the microwave treatment, the pH-adjusted starch material was dried in a convention oven at 110°C for 2 h to reach 1.81% moisture and stored in a desiccator.

### Continuous microwave treatments of pre-dried starch with fixed power setting

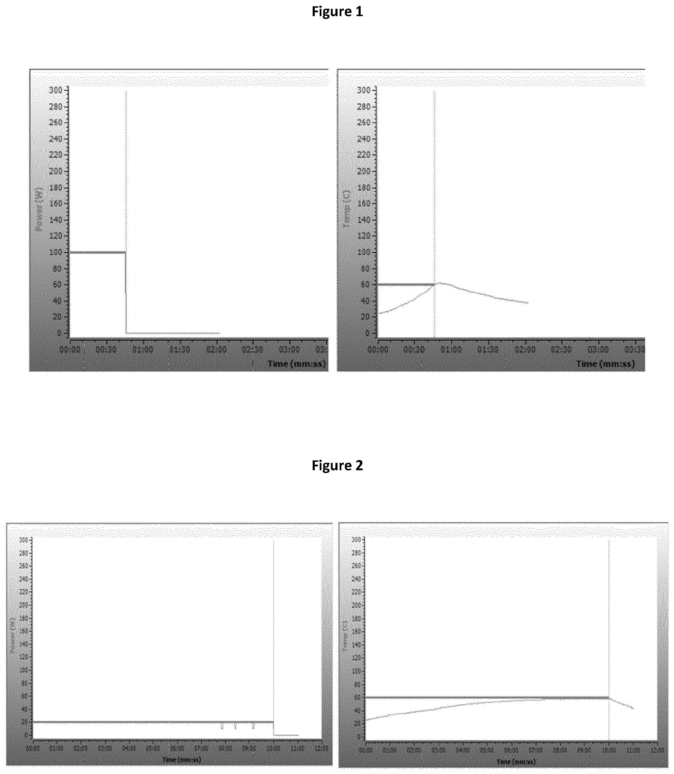

The microwave-assisted starch inhibition was performed using a microwave reactor (Discover SP, CEM Corporation). The pre-dried sample (3 g) was placed in a 10-mL test tube dedicated to the microwave reactor for the treatment. The power (in W) was set at a fixed level, while the maximum temperature was set at 60°C. Figures 1 and 2 show the examples of the power and temperature profiles during microwave treatments with fixed power setting.

### Oven treatments of starch

The pH-adjusted starch was also treated using a convection oven at 170°C for 1 h and 3 h and used as comparison with those treated using the microwave reactor. For the oven treatment, the starch material was not pre-dried in the oven at 110°C.

### Pasting properties in demineralized water

The heat and shear stability of starch was determined based on its pasting profile in demineralized water obtained using a Rapid Visco Analyzer (RVA 4500, Perten).

Starch was mixed with demineralized water in an aluminum canister to obtain 8% slurry (dry weight basis). The sample was heated isothermally at 50°C for 1 min, followed by heating to 92°C at a rate of 10.5°C/min (a total of 4 min), isothermal heating at 92°C for 5 min, cooling to 50°C at a rate of 10.5°C/min (a total of 4 min), and finally isothermal heating at 50°C for 11 min.

For better mixing, the stirring was started at 100 rpm, which was increased to 500 rpm and 960 rpm after 10 sec and 20 sec, respectively, and then decreased to 160 rpm after 30 sec, where it stayed constant until the end of the test. The heating program is summarized in Table 1.

**Table 1. RVA heating program in demineralized water.**

| | Time | | Temperature (°C) | | Stirring (rpm) |
|---|---|---|---|---|---|
| | 00:00:00 | | 50 | | 100 |
| | 00:00:10 | | 50 | | 500 |
| | 00:00:20 | | 50 | | 960 |
| | 00:00:30 | | 50 | | 160 |
| | 00:01:00 | | 50 | | 160 |
| | 00:05:00 | | 92 | | 160 |
| | 00:10:00 | | 92 | | 160 |
| | 00:14:00 | | 50 | | 160 |
| | 00:25:00 | | 50 | | 160 |

From the RVA pasting profile in demineralized water, four parameters were identified. Peak viscosity is the highest viscosity between 0 min and 10 min. Trough is the lowest viscosity after peak viscosity between 5 min and 15 min. Final viscosity is the viscosity at the end of the analysis. Breakdown is the difference between peak viscosity and trough. The ratio of trough to peak viscosity in percentage was also calculated. The increase in heat and shear stability was identified as an increase of overall viscosity, an increase in the ratio of trough to peak viscosity, a decrease in the peak viscosity with similar or higher final viscosity, and/or a decrease in the breakdown.

**Table 2. RVA pasting properties in demineralized water of the starch adjusted to pH 10 modified by continuous microwave treatments with fixed power setting and by oven treatments as comparison.**

| **Sample** | **Peak viscosity (cP)** | **Trough (cP)** | **Final viscosity (cP)** | **Breakdown (cP)** | **Ratio* (%)** |
|---|---|---|---|---|---|
| Control native starch | 3237 | 1294 | 1357 | 1943 | 40.0 |
| Oven, pH 10, 170°C, 1 h | 2390 | 1116 | 1673 | 1274 | 46.7 |
| Oven, pH 10, 170°C, 3 h | 1994 | 1817 | 2637 | 177 | 91.1 |
| Microwave, pH 10, 50 W, 90 s | 2965 | 1155 | 1471 | 1810 | 39.0 |
| Microwave, pH 10, 125W, 45 s | 3118 | 1298 | 1384 | 1820 | 41.6 |
| Microwave, pH 10, 150 W, 90 s | 2985 | 1609 | 1675 | 1376 | 53.9 |

| | | | | | |
|---|---|---|---|---|---|
| *Ratio of trough to peak viscosity | | | | | |

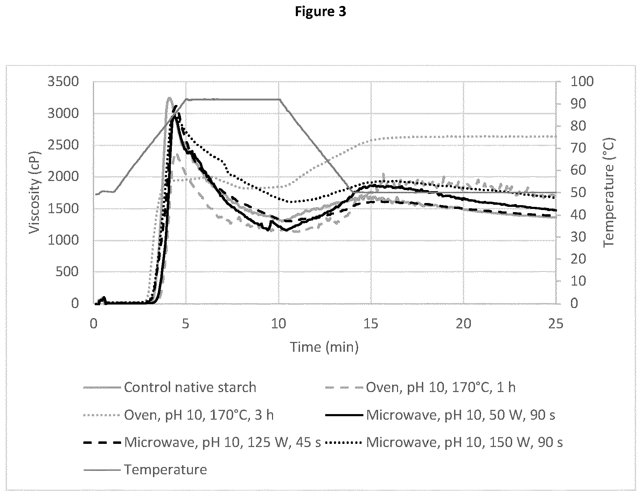

The microwave treatments of waxy maize starch that had been adjusted to pH 10 at 50 W to 125 W for 45 s to 90 s did not give strong impact on its pasting properties, comparing with those of the control native starch (Figure 3 and Table 2).

However, the microwave treatment of the same pH-adjusted starch at 150 W for 90s show a decrease in the peak viscosity, but with higher trough and final viscosity than the control native starch, resulting in lower breakdown and higher ratio of trough to peak viscosity.

The results indicated that the starch was modified by the microwave treatment at 150 W for 90s exhibiting higher heat and shear stability although the maximum temperature during the treatment was set at 60°C.

### Example 2. Microwave treatments with fixed power setting in cycles

### Preparation of starch materials

Waxy maize starch slurry (36.5% w/w dry starch concentration) was prepared using demineralized water. The pH of the slurry was adjusted by:
- adding sodium carbonate powder to reach pH 8 or 10, or
- adding 0.73% w/w citric acid powder based on dry starch weight to pH about 2.5 (an increase in the conductivity of about 500 µS), followed by adding 3.5% NaOH solution to reach pH 4 or 6.

The slurry was stirred for one hour and filtered through a sintered glass filter. The resulting starch cake was dried in a fluidized bed dryer (TG200, Retsch) at 60°C until the moisture was between 10.5% and 12.5%, and ground to fine particles.

Before the microwave treatment, the control (non pH-adjusted) native starch and pH-adjusted starch materials were dried in the convection oven at 110°C for 2 h to obtain a moisture less than 2%.

The pre-dried starch materials were stored in a desiccator until the microwave treatment. The moisture contents after drying were summarized in Table 3.

**Table 3. Moisture contents of starch materials after drying.**

| **Starch materials** | **Moisture content** |
|---|---|
| Control native starch | 1.41% |
| Starch at pH 4 | 1.35% |
| Starch at pH 6 | 1.19% |
| Starch at pH 8 | 1.41% |
| Starch at pH 10 | 1.81% |

### Pasting properties in demineralized water

The heat and shear stability of starch was determined based on its pasting profile in demineralized water obtained using the Rapid Visco Analyzer (RVA 4500, Perten) in the same manner as Example 1 above.

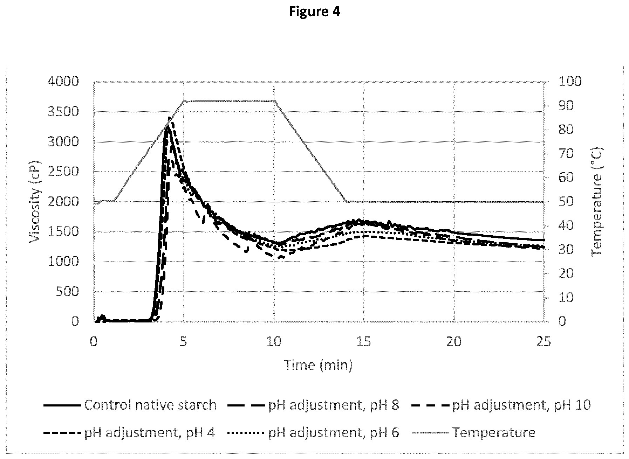

Figure 4 showed that the pH adjustment using citrate or carbonate (without oven or microwave treatment) did not change the RVA pasting profile of the starch in demineralized water, comparing with that of (non pH-adjusted) control native starch.

### Microwave treatments of pre-dried starch in cycles with fixed power setting

The microwave-assisted starch inhibition in cycles was performed using the microwave reactor (Discover SP, CEM Corporation) in the same manner as in Example 1 above, albeit repeatedly (or in cycles) with cooling and manual mixing using a micro spatula in between the microwave treatments. The additional step was aimed to improve the homogeneity of the treatment and to prevent overheating the starch.

### Oven treatments of starch

The oven-treated samples in Example 1, which were the starch adjusted to pH 10 treated in the convection oven at 170°C for 1 h and 3 h, were used as the comparison to the same starch after microwave treatments.

**Table 4. RVA pasting properties in demineralized water of non pH-adjusted (native) starches modified by the microwave treatment at 100 W for 45 s, up to 10cycles.**

| **Sample** | **Peak viscosity (cP)** | **Trough (cP)** | **Final viscosity (cP)** | **Breakdown (cP)** | **Ratio* (%)** |
|---|---|---|---|---|---|
| Control native starch | 3237 | 1294 | 1357 | 1943 | 40.0 |
| Microwave, 100 W, 45s, 1 cycle | 1398 | 1020 | 937 | 378 | 73.0% |
| Microwave, 100 W, 45s, 2 cycles | 827 | 700 | 772 | 127 | 84.6% |
| Microwave, 100 W, 45s, 4 cycles | 117 | 110 | 165 | 7 | 94.0% |
| Microwave, 100 W, 45s, 6 cycles | 192 | 174 | 283 | 18 | 90.6% |
| Microwave, 100 W, 45s, 10 cycles | 95 | 80 | 139 | 15 | 84.2% |

| | | | | | |
|---|---|---|---|---|---|
| *Ratio of trough to peak viscosity | | | | | |

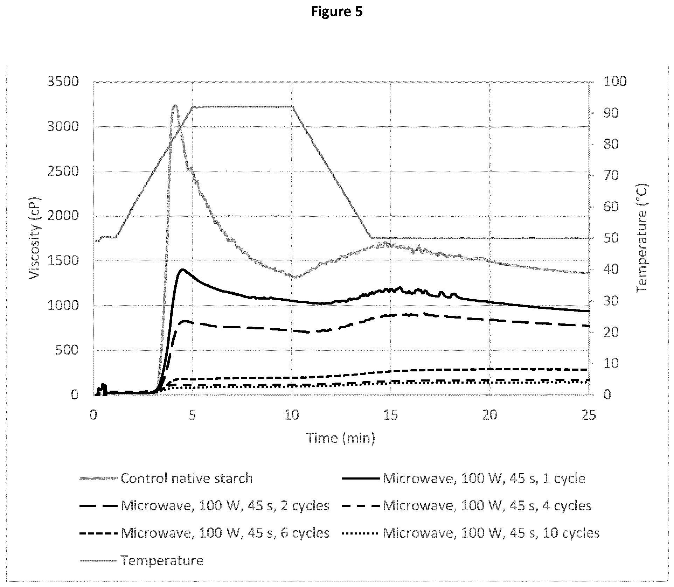

Figure 5 and Table 4 show the evolution of the pasting properties of non pH-adjusted (native) starch after the microwave treatment at 100 W for 45 s from 1 cycle to 10 cycles. The overall pasting viscosity (peak viscosity, trough, final viscosity, and breakdown) decreased with the number of cycles, while the ratio of trough to peak viscosity increased. The results indicated that although the microwave treatment might have improved the heat and shear stability of starch, it also caused some degradation.

**Table 5. RVA pasting properties in demineralized water of the starch adjusted to pH 10 modified by microwave treatments with fixed power setting in cycles and by oven treatments as comparison.**

| **Sample** | **Peak viscosity (cP)** | **Trough (cP)** | **Final viscosity (cP)** | **Breakdown (cP)** | **Ratio* (%)** |
|---|---|---|---|---|---|
| Control native starch | 3237 | 1294 | 1357 | 1943 | 40.0 |
| Oven, pH 10, 170°C, 1 h | 2390 | 1116 | 1673 | 1274 | 46.7 |
| Oven, pH 10, 170°C, 3 h | 1994 | 1817 | 2637 | 177 | 91.1 |
| Microwave, pH 10, 50 W, 90 s, 10 cycles | 1832 | 1637 | 2143 | 195 | 89.4 |
| Microwave, pH 10, 100 W, 45 s, 10 cycles | 2711 | 2130 | 2681 | 581 | 78.6 |
| Microwave, pH 10, 100 W, 60 s, 10 cycles | 3339 | 2033 | 2276 | 1306 | 60.9 |

| | | | | | |
|---|---|---|---|---|---|
| *Ratio of trough to peak viscosity | | | | | |

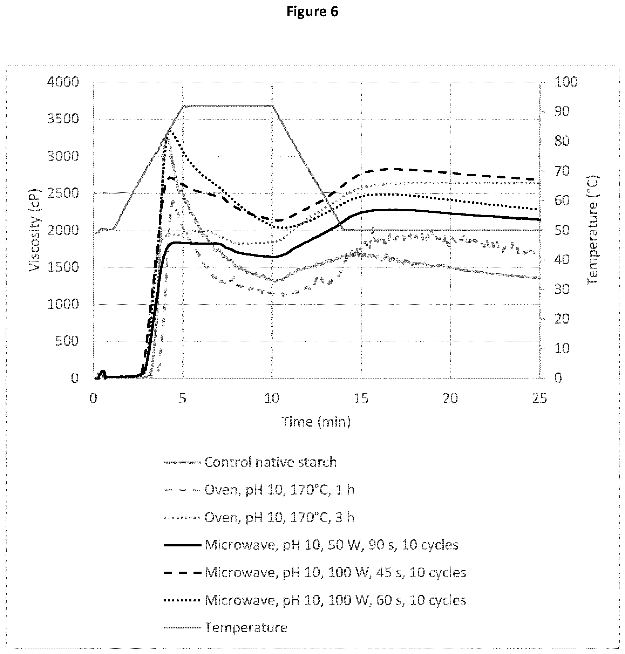

The overall viscosity of the starch adjusted to pH 10 after 10 cycles of microwave treatment at 100 W for 60 s was higher than that of the control native starch (Figure 6 and Table 5). On the other hand, 10 cycles of microwave treatments at 50 W for 90 s and at 100 W for 45 s decreased the peak viscosity, but increased the trough and the final viscosity.

The pasting profile after 10 cycles of microwave treatment at 50 W for 90 s was comparable to that after the oven treatment at 170°C for 3 h although the maximum temperature of the microwave treatment was set at 60°C.

**Table 6. RVA pasting properties in demineralized water of pH-adjusted starches (pH 4, 6, 8, and 10) modified by 10 cycles of microwave treatment at 100 W for 45 s.**

| **Sample** | **Peak viscosity (cP)** | **Trough (cP)** | **Final viscosity (cP)** | **Breakdown (cP)** | **Ratio* (%)** |
|---|---|---|---|---|---|
| Control native starch | 3237 | 1294 | 1357 | 1943 | 40.0 |
| Microwave, 100 W, 45s, 10 cycles | 95 | 93 | 139 | 2 | 97.9 |
| Microwave, pH 4, 100 W, 45 s, 10 cycles | 1097 | 1070 | 1086 | 109 | 90.1 |
| Microwave, pH 6, 100 W, 45 s, 10 cycles | 2084 | 1940 | 2098 | 144 | 93.1 |
| Microwave, pH 8, 100 W, 45 s, 10 cycles | 1963 | 1496 | 1841 | 467 | 76.2 |
| Microwave, pH 10, 100 W, 45 s, 10 cycles | 2711 | 2130 | 2681 | 581 | 78.6 |

| | | | | | |
|---|---|---|---|---|---|
| *Ratio of trough to peak viscosity | | | | | |

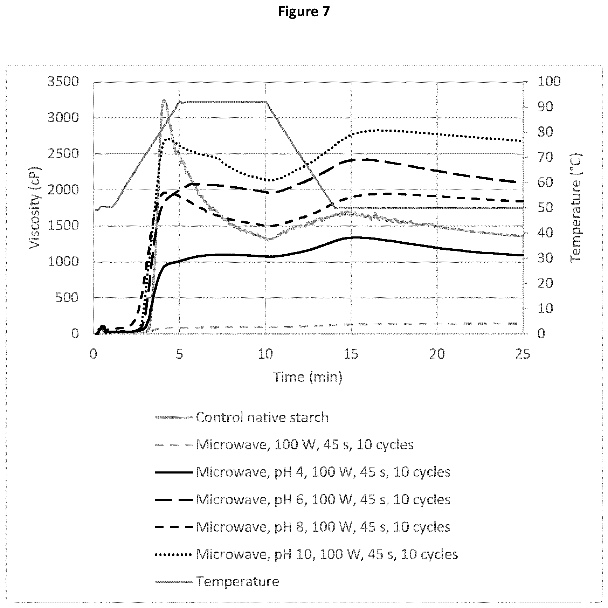

After the same microwave treatment in cycles, all pH-adjusted starches showed higher pasting viscosity than the non pH-adjusted starch (Figure 7 and Table 6).

Except the starch adjusted to pH 4, all other pH-adjusted starches after 10 cycles of microwave treatment at 100 W for 45 s had lower peak viscosity with higher trough and final viscosity than the control native starch. All microwave-assisted modified starches had lower breakdown and higher ratio of trough to peak viscosity.

### Pasting properties in citric acid solution

**Table 7. RVA heating program in citric acid solution.**

| Time | Temperature (°C) | Stirring (rpm) |
|---|---|---|
| 00:00:00 | 50 | 100 |
| 00:00:10 | 50 | 500 |
| 00:00:20 | 50 | 960 |
| 00:00:30 | 50 | 160 |
| 00:01:00 | 50 | 160 |
| 00:05:00 | 92 | 160 |
| 00:17:00 | 92 | 160 |
| 00:20:00 | 50 | 160 |
| 00:20:15 | 50 | 160 |

The acid stability of starch was determined based on its pasting profile in an acidic solution obtained using Rapid Visco Analyzer (RVA 4500, Perten). Starch was mixed with citric acid solution (pH ~3) to obtain 4.89% slurry in a canister.

The citric acid solution contained 2.1% w/w citric acid, 0.76% w/w NaCl, and 0.277% NaOH. The sample was heated isothermally at 50°C for 1 min, followed by heating to 92°C at a rate of 10.5°C/min (a total of 4 min), isothermal heating at 92°C for 12 min, cooling to 50°C at a rate of 14°C/min (a total of 3 min), and finally isothermal heating at 50°C for 15 sec.

For better mixing, the stirring was started at 100 rpm, which was increased to 500 rpm and 960 rpm after 10 sec and 20 sec, respectively, and then decreased to 160 rpm after 30 sec, where it stayed constant until the end of the test. The heating program is summarized in Table 7.

From the RVA pasting profile in citric acid solution, two parameters were identified. Peak viscosity is the highest viscosity between 0 min and 5 min. If no peak was observed between 0 min and 5 min, the viscosity at 5 min was used as the peak viscosity.

Final viscosity is the viscosity at the end of the analysis. The difference between peak viscosity and final viscosity as well as the ratio of final viscosity to peak viscosity in percentage were also calculated. The increase in acid stability was identified as a smaller positive difference between peak viscosity and final viscosity or a negative difference if there was no peak viscosity (or no viscosity drop).

**Table 8. RVA pasting properties in citric acid solution of the starch adjusted to pH 10 modified by 10 cycles of microwave treatment at 100 W for 45 s and by oven treatment at 170°C for 3 h as comparison.**

| **Sample** | **Peak viscosity* (cP)** | **Final viscosity (cP)** | **Difference** (cP)** | **Ratio*** (%)** |
|---|---|---|---|---|
| Control native starch | 1160 | 102 | 1058 | 8.8 |
| pH adjustment only, pH 10 | 1019 | 95 | 924 | 9.3 |
| Microwave, pH 10, 100 W, 45 s, 10 cycles | 306 | 510 | -204 | 166.7 |
| Oven, pH 10, 170°C, 3h | 100 | 402 | -302 | 402.0 |

| | | | | |
|---|---|---|---|---|
| *If no peak was observed between 0 min and 5 min, the viscosity at 5 min was used as peak viscosity. **Difference = peak viscosity - final viscosity ***Ratio of final viscosity to peak viscosity | | | | |

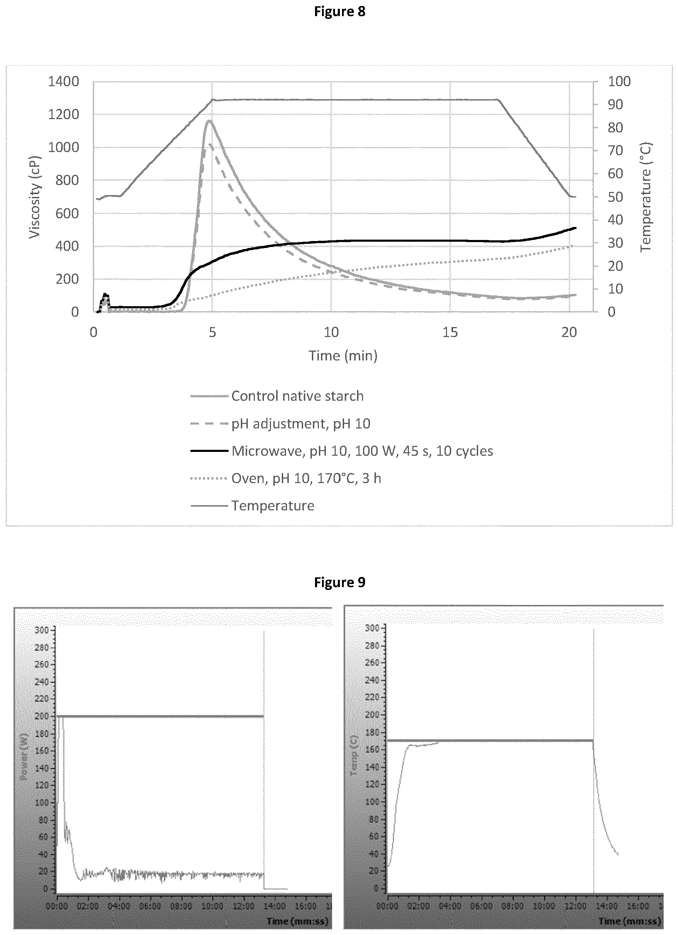

The viscosity of control native starch and the pH-adjusted starch (without oven or microwave treatment) reduced drastically after reaching the peak viscosity, indicating that these starches were hydrolyzed by the acidic solution, especially at high temperature (Figure 8 and Table 8).

On the other hand, the starch adjusted to pH 10 followed by either 10 cycles of microwave treatment at 100 W for 45 s or by the oven treatment at 170°C for 3 h did not show a clear peak viscosity or a viscosity drop during the heating process, indicating improved resistance to acid hydrolysis at high temperature (acid stability).

### Example 3. Continuous microwave treatments with fixed temperature setting

### Preparation of starch materials

The starch materials from Example 2 (with pH adjustment to 4, 6, 8, and 10, and then pre-drying to moisture below 2%) were used for continuous microwave treatments with fixed temperature setting.

### Continuous microwave treatments of pre-dried starch with fixed temperature setting

The microwave-assisted starch inhibition was performed using the microwave reactor (Discover SP, CEM Corporation) in the same manner as in Example 1 above, albeit with fixed temperature setting. The maximum power was set by default at 200 W.

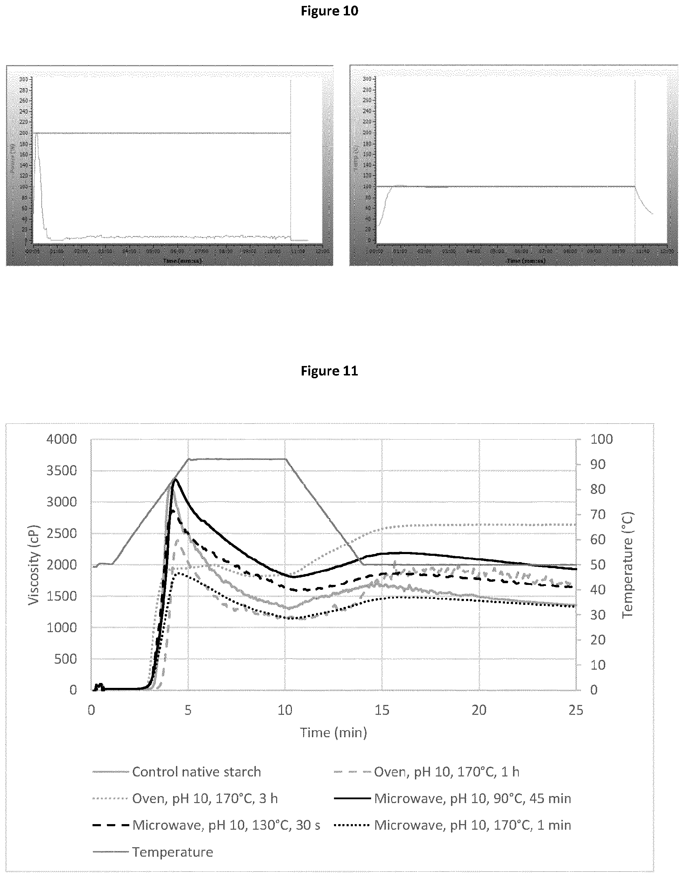

The power increased rapidly at the beginning of the treatment to reach the set temperature and then it decreased to maintain the temperature at the set level. Figures 9 and 10 show the examples of the power and temperature profiles during microwave treatments with fixed temperature setting.

### Oven treatments of starch

The oven-treated samples in Example 1, which were the starch adjusted to pH 10 treated in the convection oven at 170°C for 1 h and 3 h, were used as the comparison to the same starch after microwave treatments.

### Pasting properties in demineralized water

The heat and shear stability of starch was determined based on its pasting profile in demineralized water obtained using the Rapid Visco Analyzer (RVA 4500, Perten) in the same manner as Example 1 above.

**Table 9. RVA pasting properties in demineralized water of the starch adjusted to pH 10 modified by continuous microwave treatments with fixed temperature setting and by oven treatments as comparison.**

| **Sample** | **Peak viscosity (cP)** | **Trough (cP)** | **Final viscosity (cP)** | **Breakdown (cP)** | **Ratio* (%)** |
|---|---|---|---|---|---|
| Control native starch | 3237 | 1294 | 1357 | 1943 | 40.0 |
| Oven, pH 10, 170°C, 1 h | 2390 | 1116 | 1673 | 1274 | 46.7 |
| Oven, pH 10, 170°C, 3 h | 1994 | 1817 | 2637 | 177 | 91.1 |
| Microwave, pH 10, 90°C, 45 min | 3358 | 1803 | 1931 | 1555 | 53.7 |
| Microwave, pH 10, 130°C, 30 s | 2861 | 1585 | 1641 | 1276 | 55.4 |
| Microwave, pH 10, 170°C, 1 min | 1861 | 1137 | 1330 | 724 | 61.1 |

| | | | | | |
|---|---|---|---|---|---|
| *Ratio of trough to peak viscosity | | | | | |

The starch adjusted to pH 10 after the continuous microwave treatment at 90°C for 45 min had higher overall viscosity than the control native starch (Figure 11 and Table 9), while the continuous microwave treatment at 130°C for 30 s had lower peak viscosity, but higher trough and final viscosity.

On the other hand, the continuous microwave treatment at 170°C for 1 min resulted in lower overall pasting viscosity although the ratio of trough to peak viscosity increased and the breakdown decreased, indicating that the thermal degradation might be stronger than the inhibition with this condition.

**Table 10. RVA pasting properties in demineralized water of pH-adjusted starches (pH 4, 6, 8, and 10) modified by the continuous microwave treatment at 90°C for 60 min.**

| **Sample** | **Peak viscosity (cP)** | **Trough (cP)** | **Final viscosity (cP)** | **Breakdown (cP)** | **Ratio* (%)** |
|---|---|---|---|---|---|
| Control native starch | 3237 | 1294 | 1357 | 1943 | 40.0 |
| Microwave, pH 4, 90°C, 60 min | 2320 | 1454 | 1671 | 866 | 62.7 |
| Microwave, pH 6, 90°C, 60 min | 3702 | 2126 | 2271 | 1576 | 57.4 |
| Microwave, pH 8, 90°C, 60 min | 3401 | 1687 | 1816 | 1714 | 49.6 |
| Microwave, pH 10, 90°C, 60 min | 3265 | 1825 | 1883 | 1440 | 55.9 |

| | | | | | |
|---|---|---|---|---|---|
| *Ratio of trough to peak viscosity | | | | | |

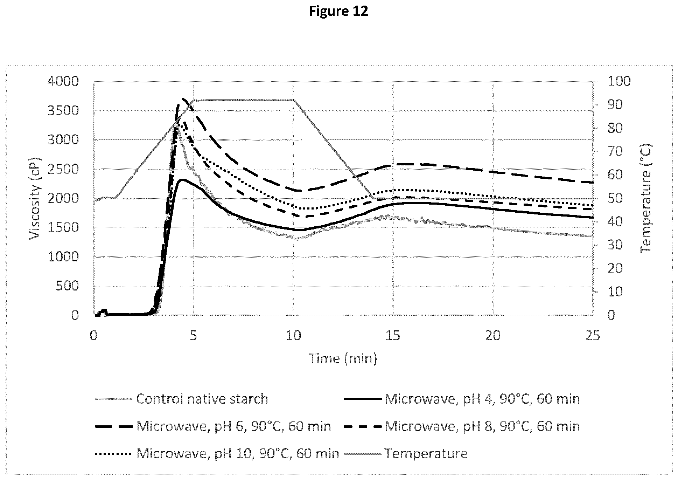

All of the pH-adjusted starches after continuous microwave treatment at 90°C for 60 min showed higher trough and final viscosity than the control native starch (Figure 12 and Table 10). Except the starch adjusted to pH 4, all other pH-adjusted starches also had higher peak viscosity than the control native starch.

The results indicated that the continuous microwave treatment at 90°C for 60 min improved the heat and shear stability of the starch.

### Example 4. Cycles of microwave treatments at fixed temperature setting

### Preparation of starch materials

The starch materials from Example 2 (with pH adjustment to 4, 6, 8, and 10, and then pre-drying to moisture below 2%) were used for microwave treatments with fixed temperature setting in cycles.

### Continuous microwave treatments of pre-dried starch with fixed temperature setting

The microwave-assisted starch inhibition was performed using the microwave reactor (Discover SP, CEM Corporation) in the same manner as in Example 3 above, albeit repeatedly (or in cycles) with cooling and manual mixing using a micro spatula in between the microwave treatments. The additional step was aimed to improve the homogeneity of the treatment and to prevent overheating the starch.

### Oven treatments of starch

The oven-treated samples in Example 1, which were the starch adjusted to pH 10 treated in the convection oven at 170°C for 1 h and 3 h, were used as the comparison to the same starch after microwave treatments.

### Pasting properties in demineralized water

The heat and shear stability of starch was determined based on its pasting profile in demineralized water obtained using the Rapid Visco Analyzer (RVA 4500, Perten) in the same manner as Example 1 above.

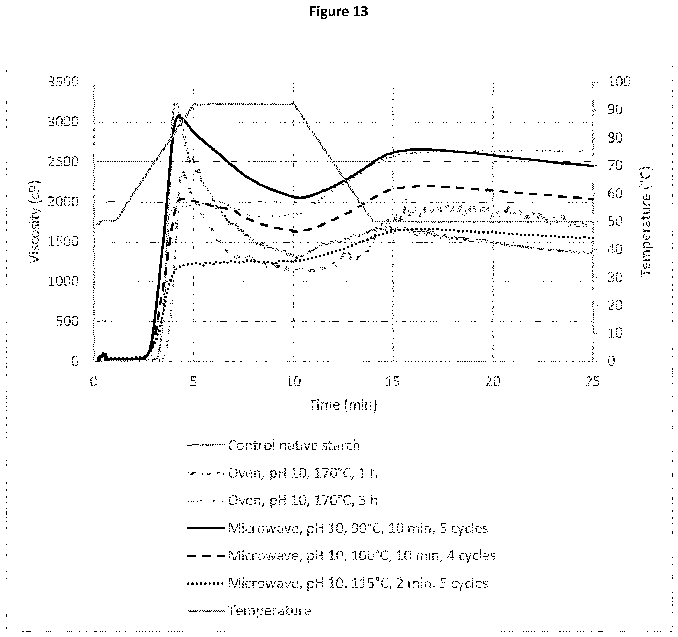

Similar to the oven treatment at 170°C for 3 h, the starch adjusted to pH 10 after five cycles of microwave treatment at 90°C for 10 min and after four cycles at 100°C for 10 min showed higher trough and final viscosity than the control native starch (Figure 13 and Table 11), indicating similar inhibition effect from the oven treatment and the microwave treatments although the microwave treatments were set at lower temperatures and for shorter durations.

On the other hand, five cycles of microwave treatment at 115°C for 2 min produced a sample with lower overall viscosity than that after the oven treatment at 170°C for 3 h, where the trough and final viscosity were similar to those of the control native starch, but with lower peak viscosity.

Although the heat and shear stability of the starch was improved as indicated by the low breakdown and high ratio of trough to peak viscosity, the degradation caused by the microwave condition at high temperature seems to be stronger than its inhibition effect.

**Table 11. RVA pasting properties in demineralized water of the starch adjusted to pH 10 modified by microwave treatments with fixed temperature setting in cycles and by oven treatments as comparison.**

| **Sample** | **Peak viscosity (cP)** | **Trough (cP)** | **Final viscosity (cP)** | **Breakdown (cP)** | **Ratio* (%)** |
|---|---|---|---|---|---|
| Control native starch | 3237 | 1294 | 1357 | 1943 | 40.0 |
| Oven, pH 10, 170°C, 1 h | 2390 | 1116 | 1673 | 1274 | 46.7 |
| Oven, pH 10, 170°C, 3 h | 1994 | 1817 | 2637 | 177 | 91.1 |
| Microwave, pH 10, 90°C, 10 min, 5 cycles | 3070 | 2049 | 2451 | 1021 | 66.7 |
| Microwave, pH 10, 100°C, 10 min, 4 cycles | 2039 | 1625 | 2036 | 414 | 79.7 |
| Microwave, pH 10, 115°C, 2 min, 5 cycles | 1266 | 1195 | 1545 | 71 | 94.4 |

| | | | | | |
|---|---|---|---|---|---|
| *Ratio of trough to peak viscosity | | | | | |

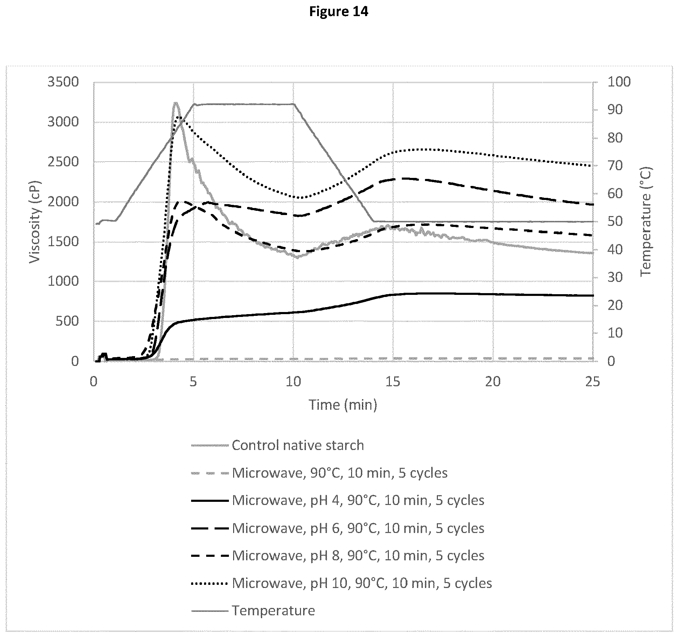

Similar to Example 2, after the same microwave treatment in cycles, all pH-adjusted starches showed higher pasting viscosity than the non pH-adjusted starch, which had almost no viscosity (Figure 14 and Table 12).

The starches adjusted to pH 6 and 10 after five cycles of microwave treatment at 90°C for 10 min had higher trough and final viscosity, but lower peak viscosity and breakdown than the control native starch, indicating improved heat and shear stability. Although the overall viscosity of the starch adjusted to pH 4 after five cycles of microwave treatment at 90°C for 10 min was lower than that of the control native starch, its peak viscosity and the trough were not detected, which is a common phenomenon observed from a highly modified starch.

**Table 12. RVA pasting properties in demineralized water of pH-adjusted starches (pH 4, 6, 8, and 10) modified by five cycles of microwave treatment at 90°C for 10 min.**

| **Sample** | **Peak viscosity (cP)** | **Trough (cP)** | **Final viscosity (cP)** | **Breakdown (cP)** | **Ratio* (%)** |
|---|---|---|---|---|---|
| Control native starch | 3237 | 1294 | 1357 | 1943 | 40.0 |
| Microwave, 90°C, 10 min, 5 cycles | ND** | ND | 37 | ND | ND |
| Microwave, pH 4, 90°C, 10 min, 5 cycles | ND | ND | 824 | ND | ND |
| Microwave, pH 6, 90°C, 10 min, 5 cycles | 1992 | 1823 | 1965 | 169 | 91.5 |
| Microwave, pH 8, 90°C, 10 min, 5 cycles | 2010 | 1378 | 1583 | 632 | 68.6 |
| Microwave, pH 10, 90°C, 10 min, 5 cycles | 3070 | 2049 | 2451 | 1021 | 66.7 |

| | | | | | |
|---|---|---|---|---|---|
| *Ratio of trough to peak viscosity **Not detected | | | | | |

### Comparison example 1. Microwave treatments with moisture above 2%

### Preparation of starch material

The starch material from Example 1 (with pH adjustment to 10, and then pre-drying to 1.81% moisture) was compared to that pre-dried in the convection oven at 100°C for 1 h to 3.58% moisture.

### Microwave treatments of starch

A microwave treatment with fixed power setting in cycles (the same as in Example 2) and two continuous microwave treatments with fixed temperature setting (the same as in Example 3) were used to evaluate the effect of moisture content on the microwave-assisted starch inhibition.

### Pasting properties in demineralized water

The heat and shear stability of starch was determined based on its pasting profile in demineralized water obtained using the Rapid Visco Analyzer (RVA 4500, Perten) in the same manner as Example 1 above.

**Table 14. RVA pasting properties in demineralized water of the starch adjusted to pH 10 and pre-dried to different moisture contents, followed by microwave treatments.**

| **Sample** | **Moisture content* (%)** | **Peak viscosity (cP)** | **Trough (cP)** | **Final viscosity (cP)** | **Breakdown (cP)** | **Ratio** (%)** |
|---|---|---|---|---|---|---|
| Control native starch | - | 3237 | 1294 | 1357 | 1943 | 40.0 |
| Microwave, pH 10, 100 W, 45 s, 10 cycles | 1.81 | 2807 | 2178 | 2676 | 629 | 77.6 |
| | 3.58 | 2718 | 1239 | 1538 | 1479 | 45.6 |
| Microwave, pH 10, 130°C, 30 s | 1.81 | 2861 | 1585 | 1641 | 1276 | 55.4 |
| | 3.58 | 2369 | 1238 | 1256 | 1131 | 52.3 |
| Microwave, pH 10, 170°C, 1 min | 1.81 | 1861 | 1137 | 1330 | 724 | 61.1 |
| | 3.58 | 1294 | 912 | 1027 | 382 | 70.5 |

| | | | | | | |
|---|---|---|---|---|---|---|
| *Moisture content during microwave treatment **Ratio of trough to peak viscosity | | | | | | |

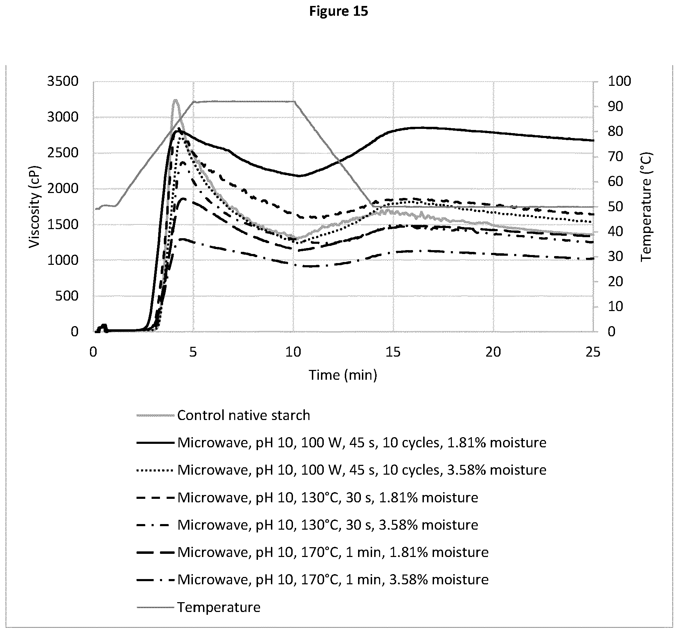

The inhibition effect (such as increase in overall viscosity, increase in the ratio of trough to peak viscosity, and decrease in breakdown) of the microwave treatment at moisture higher than 2% was weaker than that at moisture lower than 2% (Figure 15 and Table 14). The overall pasting viscosities of the samples microwave-treated at 3.58% moisture were also lower than those of their counterparts microwave-treated at 1.81% moisture.

## Claims

1. A method for producing a microwave-processed starch or flour comprising the steps consisting of:
- soaking a native starch or flour in an aqueous buffer solution,
- drying the starch or flour without causing starch gelatinization to a moisture content of less than about 2% (wt.%), and
- heating the dried starch or flour using microwaves at a temperature below 100°C, preferably between 60°C and 90 °C.

2. The method of claim 1, wherein the starch or flour is preferentially isolated from a botanical origin chosen from the group consisting of corn, waxy corn, amylomaize, wheat, waxy wheat, pea, potato, waxy potato, tapioca, waxy tapioca, rice, waxy rice, faba bean, sorghum, waxy sorghum, and mixtures thereof.

3. The method of claim 1 or 2, wherein the starch or flour in the aqueous buffer solution has a solid content of between 30% and 40%, preferably between 35% and 37% by weight.

4. The method of any one of claims 1 to 3, wherein the starch or flour is soaked for a time up to about 4 hours, or for about 5 to about 120 minutes, or for about 10 to about 60 minutes.

5. The method of any one of claims 1 to 4, wherein the buffer solution is a carbonate or a citrate solution.

6. The method of any one of claims 1 to 5, wherein the soaked starch or flour has a pH between 4 and 10.

7. The method of claim 6, wherein the soaked starch of flour has a pH from 7 to 10, more preferably from 8 to 10.

8. The method of claim 6, wherein the soaked starch or flour has a pH from 4 to 7, more preferably from 4 to 6.

9. The method of any one of claims 1 to 8 wherein the starch or flour is dried to a moisture content of less than about 2% (wt.%).

10. The method of any one of claims 1 to 9 wherein the dried starch or flour is heated using microwaves at a temperature below 100°C, preferably between 60°C and 90 °C, for a total time up to about 2 hours, preferably up to about 60 minutes.

11. The method of any one of claims 1 to 10 wherein the dried starch or flour is heated using microwaves at a power up to 200 W, preferably between 100 Wand 200 W, for a total time up to about 2 hours, preferably up to about 60 minutes.

12. The method of any one of claims 1 to 11, wherein the microwaves conditions for a total time up to about 60 minutes in a batch process are:
- at 100 W (maximum temperature 60°C) for 10 cycles of 45 s, and
- at 90°C for 5 cycles of 10 min.

13. A thermally modified starch or flour obtained by a method of any one of the preceding claims.

14. Use of the thermally modified starch or flour of claim 13 or obtained by a method of any one of claims 1 to 12 as texturizing and/or thickening agent in food applications, in particular as natural texturizer, especially for foods such as yogurt, ketchup, salad dressings, sauces, gravies, retorted foods, pet foods, gluten-free baked goods, vegan or imitation dairy products, imitation or processed cheese products, puddings, confectionary compositions, beverages and non-dairy creamers.
